# EUROPÄISCHE PATENTSCHRIFT

(11) **EP 3 066 921 B1**
(45) Veröffentlichungstag und Bekanntmachung des Hinweises auf die Patenterteilung: **20.05.2020**
(21) Anmeldenummer: 16159806.5
(22) Anmeldetag: 11.03.2016
(51) Int. Cl.: A01K 91/06, A01K 97/02

(54) **FUTTERKORB ZUM AUSWERFEN BEI DER ANGELFISCHEREI**
FOOD BASKET FOR EJECTION DURING ANGLING
MANGEOIRE À LANCER POUR LA PÊCHE À LA LIGNE

(30) Priorität: 11.03.2015 DE 202015101252 U
(43) Veröffentlichungstag der Anmeldung: 14.09.2016
(73) Patentinhaber: MMT GmbH, 57080 Siegen (DE)
(72) Erfinder: Schilling, Alexander, 56477 Rennerod (DE); Brauns, Jan, 63450 Hanau (DE)
(74) Vertreter: Winter, Brandl, Fürniss, Hübner, Röss, Kaiser, Polte - Partnerschaft mbB

(56) Entgegenhaltungen:
- WO-A1-2014/055051
- DE-U1-202014 006 742
- GB-A- 2 196 821
- JP-B1- 5 271 446
- RU-U1- 38 536
- US-A1- 2014 053 448

## Beschreibung

### Technisches Gebiet

Die Erfindung betrifft einen Futterkorb für die Angelfischerei, der zusammen mit dem Angelhaken und dessen Köder als zusätzliches Lockmittel ausgeworfen wird.

### Stand der Technik

Die DE 20 2014 006 742 U1 zeigt einen derartigen Futterkorb, der von einer Angelschnur durchsetzt ist und somit nach dem Auswerfen oberhalb eines Angelhakens positioniert wird. Der Futterkorb löst sich nach dem Auswerfen im Wasser auf und gibt das enthaltene Futter als Lockmittel frei. Nachteilig daran ist der Aufwand, der sich nach jedem Auswerfen und Auflösen des Futterkorbs durch das Befestigen eines neuen Futterkorbs ergibt.

In der Druckschrift DE 203 04 216 U1 ist ein Futterkorb mit einer Öse zur einseitigen Befestigung an der Angelschnur offenbart. Da der Futterkorb aus einem wasserbeständigen Material gefertigt ist, kann er in seinem an der Angelschnur montierten Zustand verbleiben. Der Futterkorb ist dazu ausgelegt, durch sein hohes Gewicht nach dem Auswerfen an den Gewässergrund abzusinken und sich dort über Klappbügel zu verankern bzw. zu verhaken. Nachteilig ist der vorrichtungstechnische Aufwand der Klappbügel.

Auf der Internetseite www.carp-point.de/energofish-futterkorb-rippen-mit-oese sind zwei Futterkörbe gezeigt, die vorrichtungstechnisch vereinfacht sind. Sie haben jeweils eine Öse zur einseitigen Befestigung an einer Angelschnur.

Die JP 5 271446 B1 zeigt einen gattungsgemäßen Futterkorb.

Die Druckschrift GB 2 196 821 A offenbart einen dreiteiligen Futterkorb für Fische, durch dessen Löcher Köder in Form von Maden nach Außen gelangen können.

In der US 2014/0053448 A1 ist ein kugelförmiger Futterkorb zum Anlocken von Fischen gezeigt.

### Erfindung

Dem gegenüber liegt der Erfindung die Aufgabe zu Grunde, einen Futterkorb für die Angelfischerei zu schaffen, der vorrichtungstechnisch einfach und kostengünstig ist. Dabei soll der Futterkorb erhöhte Flexibilität bei seiner Befestigung an einer Angelschnur oder einem zusätzlichen "Haar" haben. Unter "Haar" wird eine dünne und möglichst unauffällige monofilen oder geflochtenen Schnur verstanden.

Diese Aufgabe wird gelöst durch einen Futterkorb mit den Merkmalen des Anspruchs 1.

Der beanspruchte Futterkorb ist zum Auswerfen mittels einer Angel ausgebildet, er ist also nicht (zu) groß und nicht (zu) schwer. Der Futterkorb ist von einer Mehrzahl von Futter-Durchgangausnehmungen durchsetzt, die zum Ausspülen von Futter durch das Wasser und zur Entnahme von Futter durch einen angelockten Fisch dienen. Erfindungsgemäß hat der Futterkorb eine erste und eine zweite Montageausnehmung, die beide als Durchgangsausnehmung ausgebildet sind. Damit kann der Futterkorb (wie ein so genannter Boilie) an einem Haar befestigt werden, wozu dieses den Futterkorb durchdringt. Der Futterkorb kann aber auch auf eine durchlaufende Angelschnur aufgezogen werden. Damit ist ein Futterkorb mit maximierter Flexibilität geschaffen.

Der Futterkorb besteht aus einem wasserbeständigen Kunststoff, z.B. Polyamid, so dass er wieder verwendbar ist. Erfindungsgemäß weist der Kunststoff eine Porenstruktur auf, so dass er z.B. bis zu 15% seines Eigengewichts an Flüssigkeit aufnehmen, speichern und wieder abgeben kann. Die Flüssigkeit ist vorzugsweise ein Lockstoff, z.B. ein Duftstoff, der die Fische ergänzend zu dem im Innenraum enthaltenen Futter anlockt. Vorzugsweise ist die Porenstruktur durch Lasersintern erzeugt.

Weitere vorteilhafte Ausgestaltungen der Erfindung sind in den abhängigen Ansprüchen beschrieben.

Da die Montageausnehmungen nur von dem Haar oder der Angelschnur durchdrungen werden, sind sie vorzugsweise kleiner als die Futter-Durchgangausnehmungen. Wenn durch die Montageausnehmungen eine Nadel mit Widerhaken geführt werden soll, um das Haar schnell und einfach durch die Montageausnehmungen zu fädeln, haben die Montageausnehmungen eine entsprechende Größe.

Besonders bevorzugt wird es, wenn die beiden Montageausnehmungen einander gegenüber liegend sind. Dann ist die Handhabung des Futterkorbes bei der Durchführung des Haares - insbesondere mittels der Nadel - oder der Angelschnur vereinfacht.

Die Handhabung des Futterkorbes bei der Durchführung des Haares oder der Angelschnur ist weiter vereinfacht, wenn die beiden Montageausnehmungen eine Mittelachse bilden, zu der der Futterkorb im Wesentlichen rotationssymmetrisch ist.

Bei einer besonders bevorzugten Ausgestaltung ist der Futterkorb kugelförmig. Dadurch ergibt sich eine Ähnlichkeit mit dem sogenannten Boilie, und dem Angler ist schnell klar, dass der Futterkorb mittels der Haarmontage befestigt werden kann.

Wenn der Futterkorb einen Durchmesser von 8 bis 45 mm, insbesondere etwa 22 mm hat, ist die Ähnlichkeit mit dem sogenannten Boilie maximiert, und dem Angler ist sofort klar, dass der Futterkorb mittels der Haarmontage befestigt werden kann.

Die wiederholte Befüllung des Futterkorbs mit Futter wird vereinfacht, wenn er einen Deckel aufweist, der lösbar an einem Hauptabschnitt befestigt ist. Vorzugsweise hat der Futterkorb nur diese beiden Teile.

Bei der oben genannten rotationssymmetrischen Weiterbildung hat der Deckel einen kreisrunden Rand. Der Deckel kann vorrichtungstechnisch und handhabungstechnisch einfach über einen Clipverschluss oder über einen Schraubverschluss lösbar am Hauptabschnitt befestigt sein. Der Deckel ist einfach herzustellen, wenn er keine Futter-Durchgangausnehmungen hat, wenn also alle Futter-Durchgangausnehmungen den Hauptabschnitt durchsetzen.

Die Symmetrie und damit die optische Anmutung ist maximiert, wenn eine Montageausnehmung mittig im Deckel angeordnet ist, während die andere Montageausnehmung mittig im Hauptabschnitt angeordnet ist.

Die Futter-Durchgangsausnehmungen können derart gestaltet und bemessen sind, dass Karpfen das Futter dadurch ansaugen können. Dies wird z.B. durch kreisrunde Futter-Durchgangsausnehmungen erreicht.

Der erfindungsgemäße Futterkorb kann gemäß dem folgenden Verfahren an einem Haar oder einer Angelschnur befestigt werden:
- Einführen einer Nadel in beide Montageausnehmungen mit Durchführen eines Widerhakens der Nadel durch beide Montageausnehmungen;
- Einhaken des Widerhakens in eine Schlaufe des Haares oder der Angelschnur; und
- Schieben des Futterkorbs von der Nadel über die Schlaufe oder Zurückziehen der Nadel mit der Schlaufe durch beide Montageausnehmungen.

Wenn das Verfahren eine Haarmontage ist, erfolgen nach den genannten Schritten abschließend folgende Schritte:
- Einsetzten eines Stoppers in die Schlaufe; und
- Schieben des Futterkorbs zum Stopper.

Ein Ausführungsbeispiel des erfindungsgemäßen Futterkorbs ist in den Figuren dargestellt, anhand derer die Erfindung nun näher erläutert wird.

Es zeigen:
Figur 1 in einer seitlichen Ansicht das Ausführungsbeispiel des erfindungsgemäßen Futterkorbs,
Figur 2 in einem Längsschnitt den Futterkorb aus Figur 1, und
Figur 3 in einer Draufsicht den Futterkorb aus Figur 1.

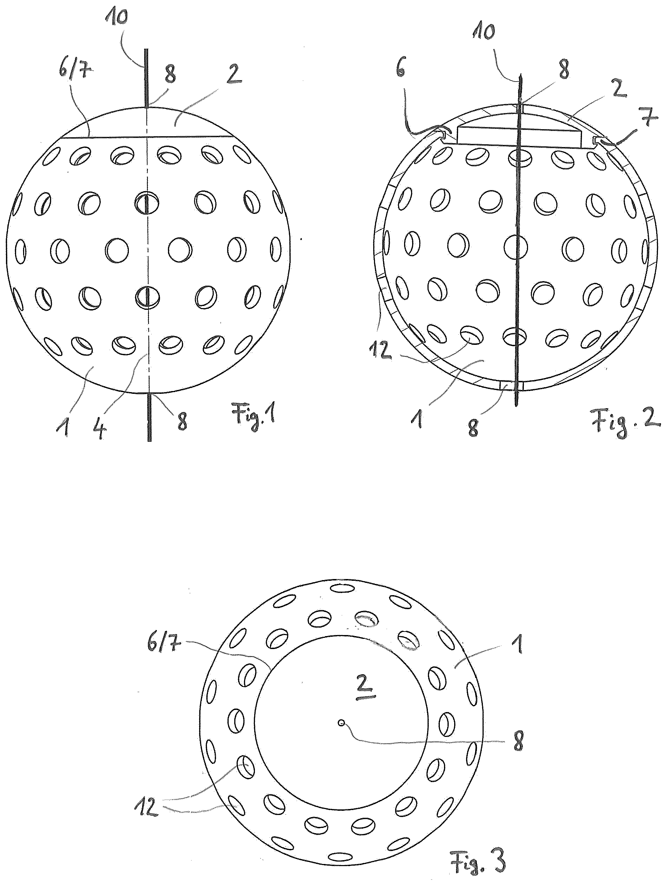

Figur 1 zeigt das Ausführungsbeispiel des erfindungsgemäßen Futterkorbs. Er ist aus Polyamid gefertigt und hat die Form einer Hohlkugel. Der Futterkorb ist unterteilt in einen Hauptabschnitt 1 und einen Deckel 2 und ist im Wesentlichen rotationssymmetrisch zu einer Mittelachse 4. Somit hat der Deckel 2 einen kreisförmigen Rand 6 mit dem er auf einen ebenfalls kreisrunden Rand 7 des Hauptabschnitts 1 aufgesetzt ist.

Im Deckel 2 und dem Hauptabschnitt 1 ist jeweils eine als kreisrunde Durchgangsausnehmung gebildete Montageausnehmung 8 vorgesehen, wobei die beiden Montageausnehmungen 8 einander gegenüber auf der Mittelachse 4 liegen.

Durch seinen Durchmesser von etwa 22 mm und durch seine Kugelform und durch die beiden Montageausnehmungen 8 erinnert der erfindungsgemäße Futterkorb einen Angler an einen sogenannten Boilie, der zum Karpfen angeln zusätzlich zum Haken mit Köder (beide nicht gezeigt) als zusätzliches Lockmittel ausgeworfen wird. Dabei ist es bekannt, derartige Boilies mittels der so genannten Haarmontage an einem Haar zu befestigen.

Auch der erfindungsgemäße Futterkorb kann mittels der so genannten Haarmontage an dem Haar 10 befestigt werden. Dazu wird eine Boilie-Nadel mit einem Widerhaken (nicht gezeigt) durch die beiden Montageöffnungen 8 geschoben. Danach wird eine Schlaufe des Haares 10 in den Widerhaken eingehängt und entweder der Futterkorb von der Boilie-Nadel über die Schlaufe geschoben oder die Boilie-Nadel mit der Schlaufe durch die beiden Montageausnehmungen 8 zurückgezogen. Schließlich wird noch ein (nicht gezeigter) Stopper z.B. aus Holz durch die Schlaufe gesteckt und der Futterkorb gegen diesen Stopper zurückgeschoben. Damit ist der Futterkorb auf die gleiche Weise wie ein Boilie an dem Haar 10 befestigt.

Figur 2 zeigt einen Längsschnitt des Futterkorbs aus Figur 1. Dabei ist zu erkennen, dass die deckelseitige Montageausnehmung 8 etwas kleiner als die Montageausnehmung 8 des Hauptabschnitts 1 ist. Weiterhin ist zu erkennen, dass sich das Haar 10 im Montierten Zustand des Futterkorbs durch den gesamten Futterkorb erstreckt.

Am Rand 6 des Deckels 2 ist ein umlaufender Klipsabschnitt vorgesehen, der im geschlossenen Zustand des Deckels 2 den Rand 7 des Hauptabschnitts hintergreift. Entsprechend der vorgenannten Rotationssymmetrie des Futterkorbs zur Mittelachse 4 ist auch der so gebildete Klipsverschluss des Deckels 2 umlaufend ausgebildet. Über den Deckel 2 kann der Futterkorb immer wieder mit (nicht gezeigtem) Futter befüllt werden.

Der Hauptabschnitt 1 ist von einer Vielzahl von kreisrunden Löchern gleichmäßig durchsetzt. Diese Löcher bilden Futter-Durchgangsausnehmungen 12 für das Futter, das nach einen öffnen des Deckels 2 (in Figur 2) von oben in den Hauptabschnitt 1 eingefüllt wurde. Genauer gesagt dienen die Futter-Durchgangsausnehmungen 12 einerseits dazu, dass Fische durch ausgespültes Futter oder zumindest durch den Geruch angelockt werden. Andererseits sind die Futter-Durchgangsausnehmungen 12 derart an das Maul eines Karpfens angepasst, dass dieser das Futter durch diese Öffnungen aussaugen kann. Als Futter kann z.B. Teig oder Mais dienen.

Figur 3 zeigt eine Draufsicht auf den Futterkorb gemäß dem Ausführungsbeispiel aus den Figuren 1 und 2 ohne das Haar 10. Dabei ist zu erkennen, dass insbesondere die deckelseitige Montageausnehmung 8 deutlich kleiner als die Futter-Durchgangsausnehmung 12 ist.

Der Hauptabschnitt 1 und der Deckel 2 sind aus Polyamid durch Lasersintern hergestellt, so dass die Wandungen des Futterkorbs eine Porenstruktur haben. Um die anlockende Wirkung für Fische über das enthaltende Futter hinausgehend zu verstärken, kann der Futterkorb auch in einem Duftöl getränkt werden, wodurch das Duftöl in den Wandungen des Futterkorbs gespeichert und unter Wasser wieder abgegeben wird.

Offenbart ist ein kugelförmiger Futterbehälter für Fische, insbesondere für Karpfen, der einen Boilie ersetzten kann. Der Futterbehälter hat zwei einander gegenüber liegende Montageausnehmungen, so dass ein wie ein Boilie mittel der Haarmontage auf einem Haar befestigt werden kann. Über einen geclipsten Deckel kann er wieder befüllt werden. Der Deckel kann abweichend vom gezeigten Ausführungsbeispiel auch einen Schraubverschluss haben.

### Bezugszeichenliste

- 1: Hauptabschnitt
- 2: Deckel
- 4: Mittelachse
- 6: Rand
- 7: Rand
- 8: Montageausnehmung
- 10: Haar
- 12: Futter-Durchgangsausnehmung

## Patentansprüche

1. Futterkorb, der zum Auswerfen mittels einer Angel ausgebildet ist, wobei der Futterkorb von einer Mehrzahl von Futter-Durchgangausnehmungen (12) durchsetzt ist, wobei der Futterkorb aus wasserbeständigem Material gefertigt ist und zwei Montageausnehmungen (8) aufweist, die beide als Durchgangsausnehmung ausgebildet sind, **dadurch gekennzeichnet, dass** das Material eine Porenstruktur aufweist.

2. Futterkorb nach Anspruch 1, wobei die beiden Montageausnehmungen (8) kleiner als die Futter-Durchgangausnehmungen (12) sind.

3. Futterkorb nach Anspruch 1 oder 2, wobei die beiden Montageausnehmungen (8) einander gegenüber liegend sind.

4. Futterkorb nach Anspruch 3, wobei die beiden Montageausnehmungen (8) eine Mittelachse (4) definieren, zu der der Futterkorb im Wesentlichen rotationssymmetrisch ist.

5. Futterkorb nach Anspruch 4, der kugelförmig ist.

6. Futterkorb nach Anspruch 5, der einen Durchmesser von 16 bis 35 mm hat.

7. Futterkorb nach einem der vorhergehenden Ansprüche, mit einem Hauptabschnitt (1), an dem ein Deckel (2) lösbar befestigt ist.

8. Futterkorb nach Anspruch 7, wobei der Deckel (2) über einen Clipverschluss oder über einen Schraubverschluss lösbar am Hauptabschnitt (1) befestigt ist.

9. Futterkorb nach Ansprüche 7 oder 8, wobei eine der Montageausnehmungen (8) im Deckel (2) ist, und wobei die andere Montageausnehmung (8) im Hauptabschnitt (1) ist.

10. Futterkorb nach einem der vorhergehenden Ansprüche, wobei die Futter-Durchgangsausnehmungen (12) derart gestaltet und bemessen sind, dass dadurch Futter für Karpfen aus dem Futterkorb saugbar ist.

## Claims

1. Food basket which is designed for casting by means of a fishing rod, wherein the food basket is penetrated by a plurality of food passage recesses (12), wherein the food basket is made of water-resistant material and has two mounting recesses (8) which are both formed as passage recesses, **characterized in that** the material has a pore structure.

2. Food basket according to claim 1, wherein the two mounting recesses (8) are smaller than the food passage recesses (12).

3. Food basket according to claim 1 or 2, wherein the two mounting recesses (8) are arranged to lie opposite each other.

4. Food basket according to claim 3, wherein the two mounting recesses (8) define a center axis (4) to which the food basket is essentially rotationally symmetrical.

5. Food basket according to claim 4, which has a spherical shape.

6. Food basket according to claim 5, having a diameter of 16 to 35 mm.

7. Food basket according to one of the preceding claims, having a main portion (1) to which a cover (2) is detachably attached.

8. Food basket according to claim 7, wherein the cover (2) is detachably attached to the main portion (1) via a clip closure or via a screw closure.

9. Food basket according to claim 7 or 8, wherein one of the mounting recesses (8) is in the cover (2) and wherein the other mounting recess (8) is in the main portion (1).

10. Food basket according to one of the preceding claims, wherein the food passage recesses (12) are designed and dimensioned such that food for carps can be sucked from the food basket through them.

## Revendications

1. Amorçoir, qui est conçu pour l'éjection au moyen d'une canne à pêche, l'amorçoir étant traversé par une pluralité d'évidements traversants de nourriture (12), l'amorçoir étant fabriqué à partir d'un matériau étanche à l'eau et présentant deux évidements de montage (8), qui sont tous deux conçus en tant qu'évidement traversant, **caractérisé en ce que** le matériau présente une structure poreuse.

2. Amorçoir selon la revendication 1, les deux évidements de montage (8) étant plus petits que les évidements traversants de nourriture (12).

3. Amorçoir selon la revendication 1 ou 2, les deux évidements de montage (8) étant opposés l'un à l'autre.

4. Amorçoir selon la revendication 3, les deux évidements de montage (8) définissant un axe central (4), par rapport auquel l'amorçoir est sensiblement à symétrie de révolution.

5. Amorçoir selon la revendication 4, qui est sphérique.

6. Amorçoir selon la revendication 5, qui présente un diamètre allant de 16 à 35 mm.

7. Amorçoir selon l'une quelconque des revendications précédentes, muni d'une partie principale (1) à laquelle est fixé de manière amovible un couvercle (2).

8. Amorçoir selon la revendication 7, le couvercle (2) étant fixé de manière amovible par l'intermédiaire d'une fermeture à clip ou par l'intermédiaire d'une fermeture à vis à la partie principale (1).

9. Amorçoir selon la revendication 7 ou 8, un des évidements de montage (8) étant situé dans le couvercle (2), et l'autre évidement de montage (8) étant situé dans la partie principale (1).

10. Amorçoir selon l'une quelconque des revendications précédentes, les évidements traversants de nourriture (12) étant agencés et dimensionnés de manière à ce que la nourriture destinée aux carpes puisse être aspirée par l'amorçoir.
